# FASCICULE DE BREVET EUROPEEN

(11) **EP 1 056 997 B1**
(45) Date de publication et mention de la délivrance du brevet: **02.05.2003**
(21) Numéro de dépôt: 99903765.8
(22) Date de dépôt: 16.02.1999
(51) Int. Cl.: G01L 9/12

(54) **CAPTEUR DE PRESSION DIFFERENTIELLE**
DRUCKDIFFERENZWANDLER
DIFFERENTIAL PRESSURE SENSOR

(30) Priorité: 18.02.1998 FR 9801956
(43) Date de publication de la demande: 06.12.2000
(73) Titulaire: A Theobald S.A., 77200 Torcy (FR)
(72) Inventeur: PECHOUX, Christophe, F-77200 Torcy (FR); CHEVEUX, Jean-Pierre, F-77400 Lagny (FR)
(74) Mandataire: Roger-Petit, Georges
(86) Numéro de dépôt international: FR9900339
(87) Numéro de publication internationale: WO99042802

(56) Documents cités:
- FR-A- 2 490 815
- GB-A- 2 059 071
- GB-A- 2 189 607
- US-A- 5 150 275
- "DIAPHRAGMS SENSE PRESSURE IN FOUR NEW TECHNIQUES" PRODUCT ENGINEERING, vol. 38, no. 6, 13 mars 1967, pages 40-42, XP002080474 NEW YORK (US)
- PATENT ABSTRACTS OF JAPAN vol. 13, no. 200 (P-869), 12 mai 1989 & JP 01 021330 A (TEIJIN LTD), 24 janvier 1989

## Description

La présente invention concerne un capteur de pression différentielle comprenant un boîtier formé de deux parties assemblées l'une à l'autre et définissant entre elles une cavité intérieure fermée, une membrane déformable divisant ladite cavité intérieure en deux chambres non communicantes qui sont en communication avec des sources de fluide sous pression au moyen de deux orifices formés respectivement dans lesdites parties du boîtier, réalisée de manière à constituer une armature d'un premier et d'un deuxième condensateur à capacité variable en étant associée à deux autres armatures montées fixes dans le boîtier du capteur de part et d'autre de l'armature centrale mobile formée par la membrane, et des moyens sensibles à une déformation de la membrane due à une différence entre les pressions régnant dans les deux chambres pour produire un signal électrique représentatif de ladite différence de pression. Un tel capteur est divulgé dans le document US 5 150 275.

A l'heure actuelle, les capteurs de ce type sont notamment utilisés pour mesurer des différences de pression très faibles (inférieures à 1 Pa). Du fait que ces capteurs fonctionnent sur le principe du condensateur double différentiel plutôt que sur le principe du condensateur unique, ils sont moins sensibles aux effets de la température qui viennent perturber la mesure de pression. De tels effets constituent la principale difficulté à résoudre pour la fabrication des capteurs de pression différentielle. Ceux que l'on observe le plus souvent dans la pratique sont de deux ordres. Ils se traduisent, d'une part par une déformation (par exemple une dilatation) de la membrane qui, même en se déplaçant très légèrement, entraîne une variation du « zéro pression » et, d'autre part, par une variation de la sensibilité du dispositif de mesure. (mesurée en V/Pa) dans le cas de la déformation d'un élément du capteur (armatures, membranes, parties de boîtier, etc...). On a constaté par exemple qu'un déplacement de la membrane d'environ 1µm, provoqué par une variation de la température, était interprété au niveau de la mesure par une différence de pression de 1 Pa. L'intérêt des capteurs mentionnés ci-dessus est conféré par la symétrie de leur construction qui leur permet de compenser les effets de la température, toute augmentation et toute diminution de la capacité du premier condensateur variable provoquant respectivement une diminution et une augmentation correspondantes de la capacité du deuxième condensateur variable.

Toutefois, les capteurs capacitifs présentent un certain nombre de problèmes. L'un de ces problèmes, qui est relatif à la structure mécanique du capteur, résulte de l'utilisation très coûteuse de la matière isolante servant à assurer, d'une part, l'étanchéité au niveau de la traversée de chaque armature dans les parties correspondantes du boîtier ainsi que le maintien des cotes mécaniques sur la gamme d'utilisation des températures, et, d'autre part, le calage symétrique des armatures, la moindre variation de distance entre les armatures et la membrane faussant la mesure.

Un autre problème fondamental de ce type de capteur résulte des câblages qui relient le capteur au dispositif de mesure et qui induisent des capacités parasites non négligeables par rapport aux capacités qui varient dans le temps en fonction de la pression et de la température. On observe notamment de nombreuses capacités parasites au niveau des fils reliant chacune des armatures à la masse qui est référencée sur le boîtier du capteur, cette dernière ayant l'inconvénient de se trouver à proximité des fils qui relient chaque armature au dispositif de mesure. Des capacités parasites sont créées également entre la traversée de chaque armature et la partie du boîtier de capteur qui lui est associée. On comprendra aisément que l'existence de toutes ces capacités parasites ne peut avoir qu'une incidence néfaste sur la précision de la mesure de la différence des pressions, puisque ces capacités peuvent varier aussi bien lorsque les fils bougent que sous l'effet d'une déformation ou d'une variation des caractéristiques des éléments qui composent le capteur.

Enfin, on peut noter encore un autre problème rencontré fréquemment avec ce type de capteur, qui est celui de la garantie de l'isolement de la membrane dans le temps, ceci afin d'éviter que des poussières, la corrosion, l'humidité, etc ne viennent créer des défauts évolutifs qui faussent les mesures. Dans la pratique on est souvent conduit à utiliser des membranes d'isolement et un fluide diélectrique intermédiaire entre la membrane déformable servant à la mesure et les membranes d'isolement. Il en résulte que de tels capteurs sont difficiles à réaliser et que leur prix est élevé.

La présente invention a donc pour but de fournir un capteur de pression qui soit simple à fabriquer, peu coûteux, capable de mesurer des pressions différentielles très faibles, par exemple de l'ordre de 1 Pa ou moins, tout en étant beaucoup moins sensible aux variations de la température et de l'ambiance dans lequel il fonctionne.

La présente invention a également pour but de fournir un capteur de pression qui soit relativement insensible aux capacités parasites de ses composants.

A cet effet, le capteur de pression différentielle selon l'invention est caractérisé en ce que les moyens sensibles comprennent un circuit de mesure des capacités correspondantes des premier et deuxième condensateurs à capacité variable qui se décompose en un premier et un deuxième circuits double face interconnectés, de taille semblable à celle de la membrane, qui sont disposés respectivement dans les deux chambres non communicantes à proximité de la membrane et parallèlement à celle-ci de manière à diviser chacune des chambres en deux parties communicantes, qui sont fixés à la membrane, au niveau de sa région périphérique, par des moyens de liaison, les faces des circuits, qui sont orientées vers la membrane déformable, comprenant chacune une région sur lesquelles sont respectivement implantées l'armature fixe du premier condensateur à capacité variable et celle du deuxième condensateur à capacité variable, et les faces des circuits, qui sont opposées à la membrane, comprenant chacune une région sur lesquelles sont respectivement implantés des composants sensibles au déplacement de la membrane vers l'une ou l'autre des armatures fixes, et une région insensible aux capacités parasites, lesquelles sont constituées respectivement par les régions périphériques des circuits, une autre région insensible aux capacités parasites étant prévue sur l'une de ces dernières faces pour l'implantation des composants qui forment le reste du circuit de mesure.

D'autres caractéristiques et avantages de la présente invention ressortiront mieux au cours de la description suivante d'une forme préférée de réalisation de l'invention, donnée en référence aux dessins annexés sur lesquels:
- la figure 1 est une vue de dessus du boîtier du capteur de pression selon l'invention;
- la figure 2 est une vue en coupe du capteur suivant la ligne I-I de la figure 1;
- la figure 3 est une vue en coupe d'une partie de la périphérie du capteur suivant la ligne II-II de la figure 1 représentant les moyens de liaison qui relient la membrane aux premier et deuxième circuits;
- la figure 4 représente le schéma électronique simplifié du circuit de mesure relié au capteur;
- la figure 5 représente le schéma d'implantation des composants sur la face du premier circuit qui est opposée à la membrane;
- la figure 6 représente le schéma d'implantation des composants sur la face du deuxième circuit qui est opposée à la membrane;
- la figure 7 est une vue en coupe simplifiée d'une variante des moyens de liaison qui relient la membrane aux premier et deuxième circuits.

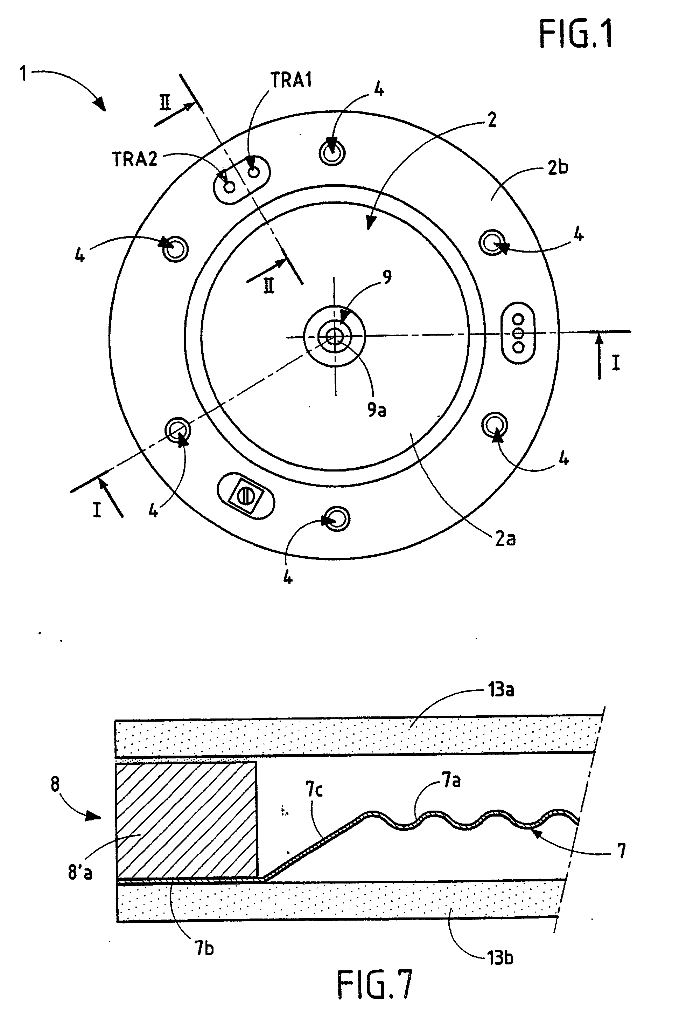

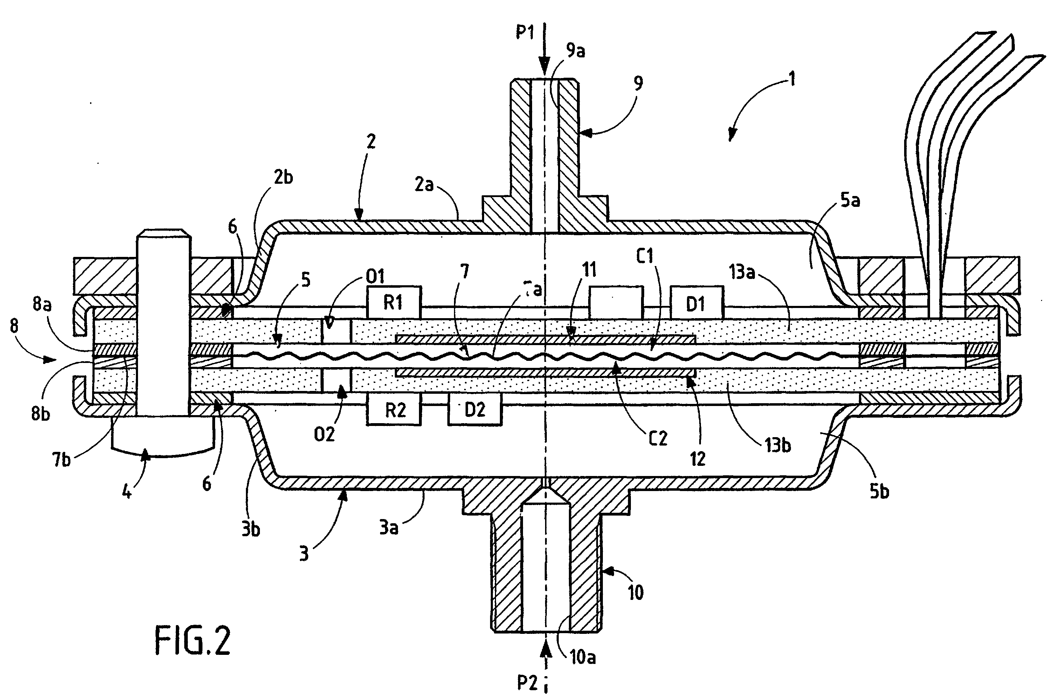

Le capteur de pression représenté sur les figures 1 et 2 comprend un boîtier 1 composé de deux parties 2 et 3 semblables, assemblées l'une à l'autre par des vis 4 et définissant entre elles une cavité intérieure fermée 5 ayant de préférence une forme cylindrique. Comme cela apparaît sur la figure 1, le boîtier a une forme circulaire mais il peut bien sûr présenter d'autres formes, par exemple une forme rectangulaire. Un joint d'étanchéité 6 en matière élastomère ou en une matière pour joint compatible avec le ou les fluides dont on désire mesurer la pression, est interposé entre les deux parties 2 et 3 du boîtier 1. En référence à la figure 2, les parties 2 et 3 du boîtier ont, vue en coupe, la forme de coupelles ayant respectivement des parois de fond planes 2a et 3a d'une épaisseur prédéterminée, et des parois périphérique 2b et 3b d'une hauteur prédéterminée, qui s'étendent sensiblement perpendiculairement aux parois de fond 2a et 3a qui leur sont associées, puis parallèlement à celles-ci, les extrémités libres de chacune des parois 2b et 3b étant respectivement recourbées vers le bas et vers le haut.

La cavité intérieure 5 du boîtier 1 est divisée par une membrane ou diaphragme déformable 7 en deux chambres non communicantes 5a et 5b. La membrane 7 a une forme générale circulaire et comporte une partie annulaire 7a ayant, vue en coupe, un profil ondulé et une partie annulaire périphérique plane 7b, qui est encastrée entre les parties 2 et 3 du boîtier 1 par des moyens de liaison 8 qui seront décrits plus en détail par la suite.

La partie 2 du boîtier comporte un raccord 9 percé d'un orifice 9a permettant de mettre la chambre 5a en communication avec une première source de fluide (non montrée) à une pression P1 par l'intermédiaire d'une conduite (également non montrée). De même, la partie 3 du boîtier 1 comporte un raccord 10 percé d'un orifice 10a permettant de mettre en communication la chambre 5b avec une seconde source de fluide sous pression (non montrée) à une pression P2 par l'intermédiaire d'une conduite (non montrée). Bien que les raccords 9 et 10 soient représentés comme étant formés d'une seule pièce respectivement avec les parties 2 et 3 du boîtier 1, ces raccords 9 et 10 pourraient être constitués par des pièces distinctes fixées par tout moyen approprié, par exemple par vissage, aux parties 2 et 3 du boîtier.

Lorsque les pressions P1 et P2 régnant respectivement dans les chambres 5a et 5b sont différentes, la membrane 7 se déforme. L'importance de cette déformation et son sens donnent une indication quant à la valeur et au signe de la différence de pression P1-P2. Le capteur de pression comporte donc, comme les capteurs de pression connus, des moyens sensibles à la déformation de la membrane 7 et produisant un signal électrique représentatif de la différence de pression P1-P2.

Dans la forme de réalisation du capteur de pression selon l'invention décrit plus haut, la membrane 7 est réalisée de manière à constituer l'armature de deux condensateurs à capacité variable C1 et C2. Pour ce faire, la membrane 7 est associée à deux armatures 11 et 12 montées fixes dans le boîtier 1 du capteur de part et d'autre de l'armature centrale mobile formée par la membrane 7. En présence d'une différence de pression P1-P2, la membrane 7 se déforme de telle sorte que sa partie annulaire 7a à profil ondulé se déplace dans une direction perpendiculaire à son plan et les moyens sensibles sont agencés de manière à mesurer la valeur du déplacement de la partie annulaire centrale 7a de la membrane 7 et à donner une indication du sens de déplacement vers le haut (P2>P1) ou vers le bas (P2<P1). Comme le capteur de pression selon l'invention fonctionne sur le principe du condensateur double différentiel, la mesure effectuée par les moyens sensibles se traduit par la mesure des capacités correspondantes C1 et C2 des premier et deuxième condensateurs à capacité variable.

Selon l'invention, les moyens sensibles comprennent, en référence à la figure 2, un circuit de mesure 13 des capacités C1 et C2 des premier et deuxième condensateurs variables, qui se décompose en un premier circuit 13a et un deuxième circuit 13b. Les circuits 13a et 13b sont des circuits imprimés de type connu, comportant un substrat double face, le substrat du circuit 13a ayant la même épaisseur que le substrat du circuit 13b. Ces derniers ont sensiblement la même forme et la même taille que la membrane 7 et sont disposés respectivement dans les chambres non communicantes 5a et 5b du boîtier 1. dans des plans sensiblement parallèles au plan de la membrane 7 et à des distances identiques et proches de celle-ci. Les régions périphériques externes des circuits 13a et 13b sont reliées, par l'intermédiaire des joints 6, respectivement aux parois périphériques 2b et 3b correspondantes des parties 2 et 3 du boîtier 1. Quant aux régions périphériques internes des circuits 13a et 13b, elles sont reliées respectivement aux régions périphériques supérieure et inférieure de la membrane 7 par les moyens de liaison 8 mentionnés ci-dessus. Ces derniers, dans la forme de réalisation représentée sur la figure 2, sont constitués par deux cales 8a et 8b identiques de forme circulaire, de type métallique, qui sont disposées exactement l'une sur l'autre entre les parois périphériques 2b et 3b des parties 2 et 3 du boîtier 1, et entre lesquelles est pincée la partie périphérique plane 7b de la membrane 7. L'étanchéité entre la membrane 7 et les cales 8a et 8b, ainsi que l'étanchéité entre les cales 8a et 8b et les circuits 13a et 13b, peuvent être facilement obtenues par un collage adéquat. De par cet agencement, la région périphérique des circuits 13a et 13b se trouve à la masse, laquelle est référencée sur les parties 2 et 3 du boîtier 1, et la région périphérique de la membrane 7, du fait qu'elle est en contact avec les cales 8a et 8b, est également à la masse. Si on compare cet agencement de la membrane 7 avec l'agencement de la membrane décrit dans l'état de la technique, on constate que la dilatation ou encore la contraction de la partie périphérique plane 7b de la membrane 7 sous l'effet d'une variation de température est atténuée, du fait qu'elle n'est plus directement fixée aux parties 2 et 3 du boîtier 1 du capteur. En effet, grâce en particulier à la présence des joints 6 et du collage effectué entre la membrane 7 et les cales 8a et 8b, et entre les cales 8a et 8b et les circuits 13a et 13b, toute variation d'origine thermique peut être aisément absorbée. De plus, les coefficients de dilatation de la membrane 7, des cales 8a et 8b, ainsi que des circuits 13a et 13b sont choisis d'une manière adéquate, ceci afin de limiter davantage les risques de dilatation ou de contraction thermique.

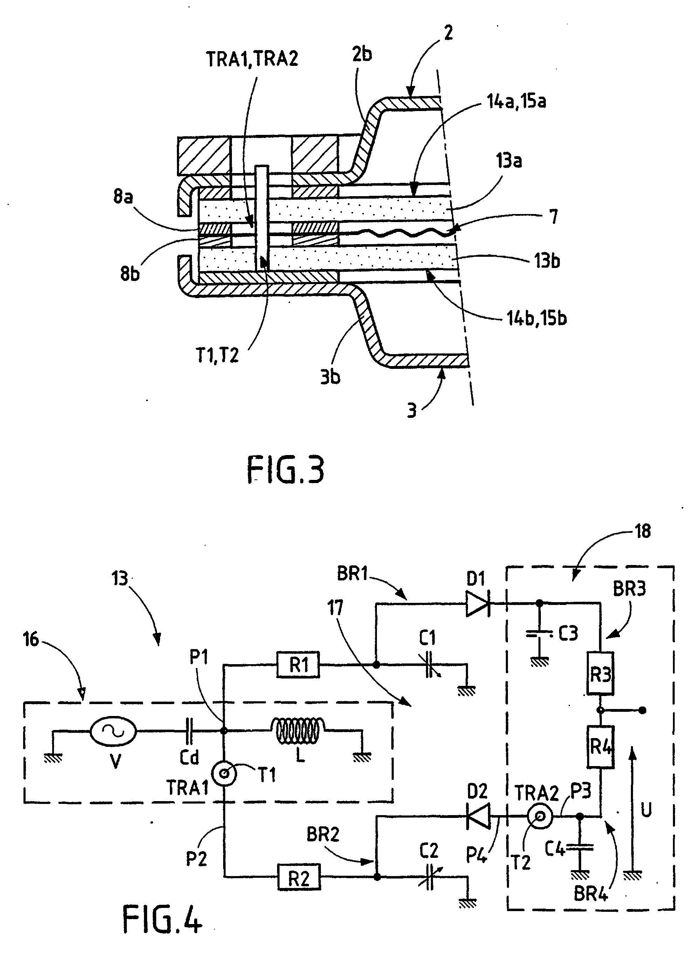

Comme on peut le voir sur la figure 3, les cales 8a et 8b sont utilisées, de manière avantageuse, pour assurer l'interconnexion électrique des circuits 13a et 13b. En référence aux figures 1 et 3, celles-ci comportent respectivement des première et deuxième traversées, lesquelles, du fait de la superposition exacte des deux cales 8a et 8b, sont en correspondance de manière à former deux traversées continues TRA1 et TRA2, dans chacune desquelles passent respectivement un premier et un deuxième conducteurs, par exemple une tige métallique T1 et une tige métallique T2, lesquelles traversent le substrat des premier et deuxième circuits 13a et 13b. Les premières extrémités libres correspondantes des tiges T1 et T2 sont respectivement en contact avec des première et deuxième pistes 14a et 15a du circuit 13a et les deuxièmes extrémités libres correspondantes des tiges T1 et T2 sont respectivement en contact avec des première et deuxième pistes 14b et 15b du circuit 13b. Comme on l'expliquera dans la suite de l'exposé, les pistes 14a, 15a, 14b et 15b seront situées dans des régions particulières des circuits 13a et 13b, en particulier des régions insensibles aux capacités parasites.

En référence à la figure 2, les faces des premier et deuxième circuits 13a et 13b, qui sont orientées vers la membrane 7, comprennent chacune une région annulaire centrale sur lesquelles sont imprimées respectivement les armatures fixes 11 et 12 des premier et deuxième condensateurs à capacité variable C1 et C2. Ces dernières ont une forme circulaire, un rayon égal à un peu moins d'un tiers du rayon de la membrane 7 et des circuits 13a et 13b, et sont disposées de manière à ce que leurs axes respectifs soient confondus avec les axes respectifs des orifices 9a et 10a. Mise à part ces deux armatures, aucun composant n'est prévu d'être implanté sur ces faces.

Une telle disposition des armatures 11 et 12 est bien plus simple que celle décrite dans l'état de la technique puisqu'elle permet de se passer, non seulement des trave sées d'armature, mais également de la matière isolante coûteuse qui les entourait. De plus, le fait que les armatures 11 et 12 soient directement imprimées sur les circuits 13a et 13b et que la distance entre les circuits 13a et 13b soit déterminée par l'épaisseur des cales 8a et 8b permet de supprimer tout risque de variation de la distance séparant les armatures 11 et 12 de la membrane 7 sous l'effet d'une variation de température. Enfin, cette disposition permet de supprimer les capacités parasites qui étaient créées entre les traversées d'armature et les parties du boîtier du capteur, ainsi que les capacités parasites qui étaient créées entre les armatures et les parties du boîtier du capteur, ces dernières ne pouvant plus exister, étant donné que les armatures 11 et 12 se trouvent dans des régions éloignées de la région périphérique du capteur, laquelle a été choisie comme masse.

Afin d'éviter que les armatures 11 et 12 ne soient atteintes par des particules de poussière diverses et des gouttelettes d'eau qui proviennent des gaz dont on veut mesurer les pressions, il est fait en sorte que les parties de la chambre 5a, qui sont formées de part et d'autre du circuit 13a, et que les parties de la chambre 5b, qui sont formées de part et d'autre du circuit 13b, communiquent respectivement entre elles par plusieurs trous traversants O1 (un seul est représenté) formés dans le circuit 13a et par plusieurs trous traversants O2 (un seul est représenté) formés dans le circuit 13b. Le diamètre des trous O1 et O2 est déterminé pour avoir une valeur faible, ceci afin d'éviter que les particules de poussière ou les gouttelettes d'eau ne passent à travers ces derniers, et lesdits trous sont positionnés de manière à ne pas être alignés avec les orifices d'alimentation en fluide 9a et 9b qui leur sont respectivement associés. Les circuits 13a et 13b et leurs trous O1 et O2 correspondants n'ont certes pas la prétention de remplacer complètement les membranes d'isolement utilisées dans l'état de la technique et qui ont été citées plus haut. Toutefois, leur présence permet d'atténuer les défauts évolutifs de la membrane qui faussent les mesures, cette solution se révélant en outre beaucoup mois coûteuse.

Toujours en référence à la figure 2, les faces des circuits 13a et 13b, qui sont dirigées dans une direction opposée à celle de la membrane 7, comprennent chacune une région sensible au déplacement de la membrane 7 vers l'une ou l'autre des armatures fixes 11 et 12. Ces régions sont, de manière évidente, situées respectivement au-dessus de la région définie par l'armature 11 et au-dessous de la région définie par l'armature 12. Comme on le verra plus en détail par la suite, sur ces régions sensibles au déplacement de la membrane 7 sont respectivement implantés des composants R1 et D1 sensibles à la variation de la capacité variable C1 du premier condensateur et des composants R2 et D2 sensibles à la variation de la capacité C2 du deuxième condensateur, lesdits composants étant les mêmes pour chacune des régions des circuits 13a et 13b. Une autre région, dont la particularité est d'être insensible aux capacités parasites, est formée sur l'une des faces des circuits 13a et 13b opposées à la membrane 7, par exemple sur la face du premier circuit 13a. Comme on le verra plus en détail par la suite, cette région est destinée à l'implantation des composants (non représentés) qui forment le reste du circuit de mesure 13.

On va maintenant se baser sur les figures 4, 5 et 6 pour décrire en détail, d'un point de vue électronique, le contenu des régions sensibles au déplacement de la membrane 7 qui sont associées respectivement aux circuits 13a et 13b et le contenu de la région insensible aux capacités parasites du circuit 13a.

La figure 4 représente un schéma électronique simplifié du circuit de mesure 13. Comme on peut le constater, ce circuit comporte une première partie 16 représentée en pointillé, qui constitue la partie alimentation du circuit 13, laquelle délivre, de préférence, une tension sinusoïdale, une deuxième partie 17, qui constitue la partie véritablement active du circuit 13, c'est à dire qui est sensible au déplacement de la membrane 7 et, enfin, une troisième partie 18 qui, comme la partie 16, est représentée en pointillé, et qui constitue la partie sortie du circuit 13. Plus précisément, la partie 17 comprend deux branches symétriques BR1 et BR2 dont les premières extrémités correspondantes sont reliées à la partie alimentation 16 du circuit 13, l'amplitude du signal reçu dans chaque branche BR1 et BR2 dépendant des capacités C1 et C2 à mesurer, et dont les deuxièmes extrémités correspondantes sont reliées à la partie sortie 18 du circuit 13.

De préférence, les branches symétriques BR1 et BR2 de la partie 17 sont constituées, d'une part par des résistances fixes R1 et R2 de même valeur, montées respectivement en série avec des condensateurs variables C1 et C2 qui sont tous deux reliés à la masse, et, d'autre part par des diodes D1 et D2 de mêmes caractéristiques et dont l'anode et la cathode correspondantes sont reliées respectivement entre la résistance R1 et le condensateur C1 et entre la résistance R2 et le condensateur C2, de manière à détecter respectivement la crête positive du signal sinusoïdal engendré entre R1 et C1 et la crête négative du signal sinusoïdal engendré entre R2 et C2.

De préférence, la partie alimentation 16 du circuit 13 comprend une source alternative V qui fournit une tension sinusoïdale à la borne des résistances fixes R1, R2 de chaque branche BR1 et BR2 qui est reliée à ladite source. Du fait de la symétrie de la partie 17 sensible au déplacement de la membrane 7, les tensions obtenues respectivement dans les branches BR1 et BR2 ont des valeurs égales, la valeur de la tension dans la branche BR2 étant l'inverse de la valeur de la tension dans la branche BR1. D'une manière avantageuse, la tension sinusoïdale fournie par la source V est exempte de toute composante continue indésirable et est, de plus, centrée parfaitement par rapport au zéro. Ceci est réalisé, de manière connue, par le montage en série avec la source V d'un condensateur de découplage Cd, dont le rôle est de supprimer toute composante continue susceptible d'être contenue dans la tension sinusoïdale, et d'une self L reliée à la masse, dont le rôle est de centrer par rapport au zéro la tension sinusoïdale fournie par la source V.

De manière connue, la partie sortie 18 du circuit 13 comprend un montage en pont composé de deux branches symétriques BR3 et BR4 qui sont reliées respectivement à la cathode de la diode D1 et à l'anode de la diode D2 de la partie active 17. De préférence, les branches symétriques BR3 et BR4 sont constituées par des résistances fixes R3 et R4 de même valeur, montées respectivement en série avec des condensateurs fixes C3 et C4 de même capacité, qui sont tous deux reliés à la masse. Le rôle des condensateurs C3 et C4 est de supprimer la composante alternative des crêtes obtenues respectivement au niveau de la cathode de la diode D1 et de l'anode de la diode D2, de telle sorte qu'un courant continu puisse circuler dans la partie sortie 18 du circuit de mesure 13. La présence des résistances R3 et R4, dans lesquelles circule le courant continu, va permettre de mesurer une tension U continue, par exemple dans la branche BR4, qui est fonction de la différence des capacités C1-C2, elle-même descriptive de la différence des pressions P1-P2 qui règnent de part et d'autre de la membrane 7.

Sur le schéma tel que représenté, R1 et R2 valent 5.11 kΩ, R3 et R4 valent 10kΩ et C3 et C4 valent 1nF. Lorsque la différence P1-P2 est nulle, le courant circulant dans R3 et R4 vaut 0.2mA et la tension U est de 0V.

Comme on peut le constater d'après le schéma du circuit 13 de la figure 4, la partie alimentation 16 n'est pas sensible aux capacités parasites. En effet, ces dernières n'auront pas d'influence sur la différence des capacités C1-C2 puisqu'elles font varier de la même manière l'amplitude et la phase correspondantes des signaux sinusoïdaux, qui sont engendrés respectivement dans les branches BR1 et BR2. La partie sortie 18 du circuit 13 n'est pas non plus sensible aux capacités parasites du fait qu'elle est parcourue par un courant continu. Finalement, seules les branches BR1 et BR2 sont sensibles aux capacités parasites, étant donné qu'elles sont excitées par la tension sinusoïdale fournie par la source V. Par conséquent, l'invention fournit un capteur de pression différentielle, dans lequel le circuit de mesure 13 des capacités, comparé aux circuits classiques de mesure de capacités, est très peu influencé par les capacités parasites. Comme les parties 16 et 18 du circuit 13 ne sont pas sensibles aux capacités parasites, il paraît astucieux de les choisir pour réaliser, par l'intermédiaire des traversées TRA1 et TRA2, la connexion électrique entre les circuits 13a et 13b. A cet effet, comme on peut le voir sur la figure 4, la tige T1 contenue dans la traversée TRA1 aura ses extrémités libres reliées respectivement entre Cd et L du circuit 13a par une piste P1, et à R2 du circuit 13b par une piste P2, et la tige T2 contenue dans la traversée TRA2 aura ses extrémités libres reliées respectivement à C4 du circuit 13a par une piste P3, et à l'anode de D2 du circuit 13b par une piste P4.

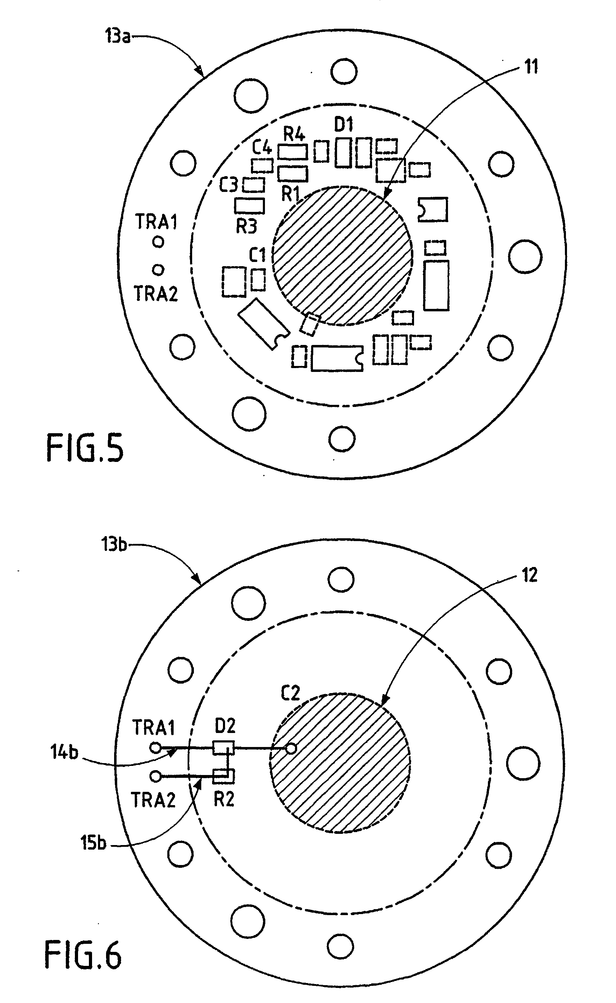

Comme on peut le voir sur les figures 5 et 6, tous les composants du circuit de mesure 13 sont, de préférence, montés en surface. Plus précisément en référence à la figure 5, la branche BR1 de la partie 17, sensible à la variation de la capacité C1 du premier condensateur variable, est montée sur la face du circuit 13a, opposée à la membrane 7, dans une région annulaire intermédiaire de celle-ci. Ladite région annulaire intermédiaire constitue également la région d'implantation des composants de la partie alimentation 16, lesquels, étant connus de l'homme du métier, ne seront ni décrits, ni référencés, ainsi que la région d'implantation des composants C3, C4, R3 et R4 de la partie sortie 18 du circuit 13. Plus précisément maintenant en référence à la figure 6, la branche BR2, sensible à la variation de la capacité C2 du deuxième condensateur variable, est montée sur la face du circuit 13b, opposée à la membrane 7, également dans une région intermédiaire annulaire de celle-ci. Il s'avère qu'une telle architecture des circuits 13a et 13b est tout à fait appropriée pour résoudre le problème de l'apparition néfaste des capacités parasites, puisque les circuits 13a et 13b sont incorporés dans le boîtier 1 du capteur sans nécessiter de fils de liaison, que les liaisons entre les différents composants ne sont plus constituées par des fils susceptibles de bouger mais par des pistes imprimées, et, enfin, que les armatures 11 et 12 sont en quelque sorte isolées des parties électriques du circuit 13 sensibles au déplacement de la membrane 7, respectivement par les substrat des circuits 13a et 13b. Il en résultera donc que les mesures de pression différentielle seront beaucoup plus précises.

Afin de réduire encore davantage les effets de la température, les éléments du capteur de pression sont choisis dans une matière appropriée. A titre indicatif, les circuits 13a et 13b comportent chacun un substrat en époxy chargé de fibre de verre, les cales métalliques 8a et 8b sont en acier et la membrane 7 est en acier.

Il va de soi que la forme de réalisation du capteur de pression différentielle qui a été décrite ci-dessus a été donnée à titre purement indicatif et nullement limitatif, et que de nombreuses modifications peuvent être facilement apportées par l'homme du métier sans pour autant sortir du cadre de l'invention. C'est ainsi notamment que les moyens de liaison 8 peuvent, comme cela est représenté sur la figure 7, comporter une cale 8'a au lieu de deux cales 8a et 8b. Dans ce cas, la partie périphérique 7b de la membrane 7 est pincée entre la face inférieure de la cale 8'a et la région périphérique externe du circuit 13b et est, de plus, raccordée à la partie 7a de la membrane 7 par une partie en gradin 7c. Le montage des moyens de liaison 8 s'en trouve donc simplifié et la membrane 7 est plus résistante car elle est renforcée mécaniquement par la partie en gradin 7c, tout en restant aussi sensible. Enfin, du fait de la présence de l'unique cale 8'a, la partie 7a de la membrane 7, qui est la partie véritablement sensible à la pression, est moins perturbée qu'avec l'utilisation des moyens de liaison à deux cales, le montage de ces dernières étant susceptible d'être plus ou moins bien réalisé (cale légèrement voilée, etc...).

## Revendications

1. Capteur de pression différentielle comprenant un boîtier (1) formé de deux parties (2, 3) assemblées hermétiquement l'une à l'autre et définissant entre elles une cavité intérieure fermée (5), une membrane déformable (7) divisant ladite cavité intérieure en deux chambres non communicantes (5a, 5b) qui sont en communication avec des sources de fluide sous pression au moyen de deux orifices (9a, 10a) formés respectivement dans lesdites parties du boîtier (1), réalisée de manière à constituer une armature d'un premier et d'un deuxième condensateur à capacité variable (C1, C2) en étant associée à deux autres armatures (11, 12) montées fixes dans le boîtier (1) du capteur de part et d'autre de l'armature centrale mobile formée par la membrane (7), et des moyens sensibles à une déformation de la membrane (7) due à une différence entré les pressions (P1, P2) régnant dans les deux chambres (5a, 5b) pour produire un signal électrique représentatif de ladite différence de pression, **caractérisé en ce que** les moyens sensibles comprennent un circuit de mesure (13) des capacités correspondantes (C1, C2) des premier et deuxième condensateurs à capacité variable qui se décompose en un premier (13a) et un deuxième (13b) circuits double face interconnectés, de taille semblable à celle de la membrane (7), qui sont disposés respectivement dans les deux chambres non communicantes (5a, 5b) à proximité de la membrane (7) et parallélement à celle-ci de manière à diviser chacune des chambres (5a, 5b) en deux parties communicantes, qui sont fixés à la membrane (7), au niveau de sa région périphérique, par des moyens de liaison (8), les faces des circuits (13a, 13b), qui sont orientées vers la membrane déformable (7), comprenant chacune une région sur lesquelles sont respectivement implantées l'armature fixe (11) du premier condensateur à capacité variable et celle (12) du deuxième condensateur à capacité variable, et les faces des circuits (13a, 13b), qui sont opposées à la membrane (7), comprenant chacune une région sur lesquelles sont respectivement implantés des composants (R1, C1 et D1; R2, C2 et D2) sensibles au déplacement de la membrane (7) vers l'une ou l'autre des armatures fixes (11, 12), et une région insensible aux capacités parasites, lesquelles sont constituées respectivement par les regions périphériques des circuits (13a, 13b), une autre région insensible aux capacités parasites étant prévue sur l'une de ces dernières faces pour l'implantation des composants qui forment le reste du circuit de mesure (13).

2. Capteur selon la revendication 1, **caractérisé en ce que** les régions périphériques des premier et deuxième circuits (13a, 13b) forment la masse du circuit de mesure (13).

3. Capteur selon la revendication 1 ou 2, **caractérisé en ce que** la région insensible aux capacités parasites prévuo sur l'une des faces des circuits (13a, 13b) opposées à la membrane (7) se décompose en la partie alimentation (16) et en la partie sortie (18) du circuit de mesure (13).

4. Capteur selon l'une quelconque des revendications 1 à 3, **caractérisé en ce que** les régions correspondantes des faces des premier et deuxième circuits (13a, 13b), qui sont sensibles au déplacement de la membrane (7), comprennent respectivement deux branches symétriques (BR1, BR2) dont les premières extrémités correspondantes sont reliées à la partie alimentation (16) du circuit de mesure (13), l'amplitude du signal reçu dans chaque branche dépendant de la capacité à mesurer.

5. Capteur selon la revendication 4, **caractérisé en ce que** les branches symétriques (BR1, BR2) sensibles au déplacement de la membrane (7) sont constituées chacune, d'une part par une résistance fixe (R1; R2) montée en série avec un condensateur variable (C1; C2) qui est à la masse, et, d'autre part par une diode (D1; D2) dont l'anode ou la cathode est reliée entre la résistance fixe (R1; R2) et le condensateur variable (C1; C2) qui lui sont associés.

6. Capteur selon les revendications 3 à 5, **caractérisé en ce que** la partie alimentation (16) du circuit de mesure comprend une source alternative (V) qui fournit une tension à la borne des résistances fixes (R1; R2) de chaque branche (BR1; BR2) qui est reliée à ladite source, la tension alternative fournie étant exempte de toute composante continue et étant centrée par rapport au zéro.

7. Capteur selon les revendications 3 à 5, **caractérisé en ce que** la partie sortie (18) du circuit de mesure (13) comprend un montage en pont dont les deux branches sont reliées respectivement à l'anode ou à la cathode des diodes (D1; D2) de chaque branche (BR1; BR2), les branches du pont étant constituées chacune par l'association d'un condensateur fixe (C3; C4) et d'une résistance fixe (R3; R4) de manière à ce qu'une tension continue U soit mesurée aux bornes de l'une ou l'autre des branches du pont, cette tension traduisant la différence des pressions (P1-P2) qui régnent de part et d'autre de la membrane (7).

8. Capteur selon l'une quelconque des revendications 1 à 7, **caractérisé en ce que** les moyens de liaison (8) entre la membrane (7) et chacun des premier et deuxième circuits (13a, 13b) assurent la connexion électrique entre le premier (13a) et le deuxième (13b) circuits, ainsi que la mise à la masse de la membrane (7).

9. Capteur selon la revendication 8, **caractérisé en ce que** les moyens de liaison (8) comprennent au moins une cale métallique (8'a), qui est interposée entre les régions périphériques correspondantes des premier et deuxième circuits (13a, 13b), dont une face est en contact direct avec la région périphérique de la membrane (7) de sorte que cette dernière se trouve à la masse, et qui comporte plusieurs traversées (TRA1, TRA2) dans chacune desquelles passe un conducteur (T1, T2), lesquels traversent le substrat des premier et deuxième circuits (13a, 13b) au niveau de leur région périphérique respective, les extrémités libres des conducteurs (T1, T2) étant respectivement en contact avec des pistes du premier circuit (13a) et des pistes du deuxième circuit (13b), lesdites pistes étant situées dans une région des faces des circuits (13a, 13b) qui est insensible aux capacités parasites.

10. Capteur selon l'une quelconque des revendications 1 à 9, **caractérisé en ce que** les deux parties communicantes de chacune des chambres non communicantes (5a, 5b) du capteur communiquent entre elles par au moins un trou traversant (O1; O2) qui est formé dans le circuit (13a; 13b) associé à chaque chambre (5a; 5b) et qui est positionné de manière à ne pas être aligné avec l'orifice d'alimentation en fluide sous pression (9a; 10a) qui lui est associé.

## Claims

1. A differential pressure sensor comprising a housing (1) consisting of two parts (2, 3) which are assembled together hermetically and which define between them a closed inner cavity (5), a deformable diaphragm (7) dividing the said inner cavity into two non-communicating chambers (5a, 5b) which are in communication with pressurised fluid sources via two orifices (9a,10a) formed respectively in the said parts of the housing (1) and being constructed in such a way as to constitute a frame of a first and second variable capacitance capacitor (C1, C2) by being associated with two other frames (11, 12) rigidly mounted in the housing (1) of the sensor on either side of the central movable frame constituted by the diaphragm (7), and means which are sensitive to any deformation of the diaphragm (7) due to a difference between the pressures (P1, P2) obtaining in the two chambers (5a, 5b) in order to produce an electrical signal representing the said pressure difference, **characterised in that** the sensitive means comprise a circuit (13) for measuring the corresponding capacitances (C1, C2) of the first and second variable capacitance capacitors which is broken down into a first (13a) and a second (13b) interconnected double-faced circuits of a size similar to that of the diaphragm (7) and which are disposed respectively in the two non-communicating chambers (5a, 5b) close to the diaphragm (7) and parallel therewith in such a way as to divide each of the chambers (5a, 5b) into two communicating parts which are fixed to the diaphragm (7) at the level of its peripheral portion, by connecting means (8), those faces of the circuits (13a, 13b) which are orientated towards the deformable diaphragm (7) each comprising an area on which are respectively implanted the fixed frame (11) of the first variable capacitance capacitor and that (12) of the second variable capacitance capacitor, and the faces of the circuits (13a, 13b) which are opposite the diaphragm (7), each comprising a region on which are respectively implanted components (R1, C1 and D1; R2, C2 and D2) which are sensitive to a displacement of the diaphragm (7) towards one or other of the fixed frames (11, 12), and a region which is insensitive to the parasitic capacitances which are respectively constituted by the peripheral regions of the circuits (13a, 13b), another region which is insensitive to parasitic capacitances being provided on one of these latter faces for implanting components which form the remainder of the measuring circuit (13).

2. A sensor according to claim 1, **characterised in that** the peripheral regions of the first and second circuits (13a, 13b) form the earth of the measuring circuit (13).

3. A sensor according to claim 1 or 2, **characterised in that** the region which is insensitive to the parasitic capacitances and which is provided on one of the faces of the circuits (13a, 13b) facing the diaphragm (7) is broken down into the feed part (16) and the output part (18) of the measuring circuit (13).

4. A sensor according to any one of claims 1 to 3, **characterised in that** the corresponding regions of the faces of the first and second circuits (13a, 13b) which are sensitive to the displacement of the diaphragm (7) respectively comprise two symmetrical branches (BR1, BR2) of which the first corresponding extremities are connected to the feed part (16) of the measuring circuit (13), the amplitude of the signal received in each branch depending on the capacitance to be measured.

5. A sensor according to claim 4, **characterised in that** the symmetrical branches (BR1, BR2) which are sensitive to displacement of the diaphragm (7) are each constituted on the one hand by a fixed resistor (R1; R2) mounted in series with a variable capacitor (C1; C2) which is the earth and on the other by a diode (D1; D2) of which the anode or the cathode is connected across the fixed resistor (R1; R2) and the variable capacitance (C1; C2) which are associated with it.

6. A sensor according to claims 3 to 5, **characterised in that** the feed part (16) of the measuring circuit comprises an alternative source (V) which supplies a voltage to the terminal of the fixed resistors (R1; R2) of each branch (BR1; BR2) which is connected to the said source, the alternative voltage supplied being free of any direct component and being centered in relation to zero.

7. A sensor according to claims 3 to 5, **characterised in that** the output part (18) of the measuring circuit (13) comprises a bridge assembly the two arms of which are connected respectively to the anode or to the cathode of the diodes (D1; D2) of each branch (BR1; BR2), the branches of the bridge being each constituted by the association of a fixed capacitor (C3; C4) and a fixed resistor (R3; R4) so that a direct voltage (U) is measured at the terminals of one or other of the arms of the bridge, this voltage reflecting the difference in pressures (P1- P2) which obtain on either side of the diaphragm (7).

8. A sensor according to any one of claims 1 to 7, **characterised in that** the connecting means (8) between the diaphragm (7) and each of the first and second circuits (13a, 13b) provide an electrical connection between the first (13a) and second (13b) of the circuits and also earthing of the diaphragm (7).

9. A sensor according to claim 8, **characterised in that** the connecting means (8) comprise at least one metal shim 8'a) which is interposed between the corresponding peripheral regions of the first and second circuits (13a, 13b) of which one face is in direct contact with the peripheral region of the diaphragm (7) so that this latter is earthed, and which comprises a plurality of bushings (TRA1, TRA2) through each of which passes a conductor (T1, T2) which pass through the substrate of the first and second circuits (13a, 13b) at the level of their respective peripheral region, the free ends of the conductors (T1, T2) being respectively in contact with tracks of the first circuits (13a) and the tracks of the second circuit (13b), the said tracks being situated in a region of the faces of the circuits (13a, 13b) which is insensitive to parasitic capacitances.

10. A sensor according to any one of claims 1 to 9, **characterised in that** the two communicating parts of each of the non-communicating chambers (5a, 5b) of the sensor communicate *inter se* by at least one through bore (O1; O2) formed in the circuit (13a; 13b) associated with each chamber (5a; 5b) and which is so positioned as not to be aligned with the pressurised fluid supply orifice (9a;10a) with which it is associated.

## Patentansprüche

1. Druckdifferenzwandler, umfassend ein Gehäuse (1), das aus zwei Teilen (2,3) gebildet wird, die dicht schließend miteinander zusammengefügt sind und zwischen sich einen geschlossenen inneren Hohlraum (5) umschließen, eine deformierbare Membran (7), welche den besagten inneren Hohlraum in zwei getrennte Kammern (5a,5b) unterteilt, die mit unter Druck stehenden Flüssigkeitsquellen verbunden sind mittels zweier Öffnungen (9a,10a), die jeweils in den besagten Teilen des Gehäuses (1) ausgebildet sind, so gestaltet, daß ein Belag eines ersten und eines zweiten Kondensators mit variabler Kapazität (C1,C2) geschaffen wird, der mit zwei weiteren Belägen (11,12) verbunden ist, die fest im Gehäuse (1) des Wandlers beiderseits des zentralen beweglichen durch die Membran (7) gebildeten Belags montiert sind, und Mittel, die gegenüber einer Deformation der Membran (7) aufgrund einer Differenz der Drucke (P1,P2) empfindlich sind, die in den beiden Kammern (5a,5b) herrschen, um ein für die besagte Druckdifferenz repräsentatives elektrisches Signal zu erzeugen, **dadurch gekennzeichnet, daß** die empfindlichen Mittel einen Meßstromkreis (13) der entsprechenden Kapazitäten (C1,C2) des ersten und zweiten Kondensators mit variabler Kapazität umfassen, der in einen ersten (13a) und einen zweiten (13b) der doppelseitig zusammengeschalteten Stromkreise zerfällt, die von der Größe her vergleichbar sind mit dem der Membran (7), und die jeweils in den beiden nicht kommunizierenden Kammern (5a,5b) nahe bei der Membran (7) und parallel zu dieser angeordnet sind, um jede der Kammern (5a,5b) in zwei kommunizierende Teile zu unterteilen, die an der Membran (7) auf Höhe ihres peripheren Bereichs durch Verbindungsmittel (8) befestigt sind, und die Seiten der Stromkreise (13a,13b), die zur deformierbaren Membran (7) hin ausgerichtet sind, jede einen Bereich aufweisen, auf dem jeweils der feste Belag (11) des ersten Kondensators mit variabler Kapazität und der (12) des zweiten Kondensators mit variabler Kapazität befestigt sind, und die Seiten der Stromkreise (13a,13b), die der Membran (7) gegenüber angeordnet sind, jede einen Bereich aufweisen, auf dem jeweils Bauteile (R1, C1 und D1; R2, C2 und D2) befestigt sind, die gegenüber einer Verschiebung der Membran (7) gegen den einen oder anderen der festen Beläge (11,12) empfindlich sind, und ein unempfindlicher Bereich gegenüber Streukapazitäten, welche jeweils durch die peripheren Bereiche der Stromkreise (13a,13b) gebildet werden, und ein weiterer gegenüber Streukapazitäten unempfindlicher Bereich auf einer der letzteren Seiten für die Befestigung von Bauteilen vorgesehen ist, die den Rest des Meßstromkreises (13) bilden.

2. Wandler nach Anspruch 1, **dadurch gekennzeichnet, daß** die peripheren Bereiche des ersten und zweiten Stromkreises (13a,13b) die Masse des Meßstromkreises (13) bilden.

3. Wandler nach Anspruch 1 oder 2, **dadurch gekennzeichnet, daß** der gegenüber Streukapazitäten unempfindliche Bereich, der auf einer der Seiten der gegenüber der Membran (7) liegenden Stromkreise (13a,13b) vorgesehen ist, in den Einspeisungsteil (16) und den Ausgangsteil (18) des Meßstromkreises (13) aufgeteilt wird.

4. Wandler nach einem der Ansprüche 1 bis 3, **dadurch gekennzeichnet, daß** die entsprechenden Bereiche der Seiten des ersten und zweiten Stromkreises (13a,13b), die gegenüber der Verschiebung der Membran (7) empfindlich sind, jeweils zwei symmetrische Zweige (BR1,BR2) aufweisen, deren entsprechende erste Enden an den Einspeisungsteil (16) des Meßstromkreises (13) angeschlossen sind, und die Amplitude des an jedem Zweig empfangenen Signals von der zu messenden Kapazität abhängt.

5. Wandler nach Anspruch 4, **dadurch gekennzeichnet, daß** die symmetrischen Zweige (BR1,BR2), die gegenüber einer Verschiebung der Membran (7) empfindlich sind, einerseits aus einem Festwiderstand (R1,R2) bestehen, der mit einem geerdeten einstellbaren Kondensator (C1,C2) in Serie geschaltet ist, und andererseits aus einer Diode (D1,D2), deren Anode oder Kathode zwischen den Festwiderstand (R1,R2) und den einstellbaren Kondensator (C1,C2) geschaltet ist, die mit ihr verbunden sind.

6. Wandler nach den Ansprüchen 3 bis 5, **dadurch gekennzeichnet, daß** der Einspeisungsteil (16) des Meßstromkreises eine Wechselstromquelle (V) aufweist, die an der Anschlußklemme der Festwiderstände (R1,R2) jedes Zweiges (BR1,BR2), der mit der besagten Quelle verbunden ist, für eine Spannung sorgt, wobei die gelieferte Wechselspannung frei von jeder Gleichstromkomponente und gegen Null zentriert ist.

7. Wandler nach den Ansprüchen 3 bis 5, **dadurch gekennzeichnet, daß** der Ausgangsteil (18) des Meßstromkreises (13) eine Brückenschaltung aufweist, deren beide Zweige jeweils mit der Anode oder mit der Kathode der Dioden (D1,D2) jedes Zweiges (BR1,BR2) verbunden sind, jeder der Zweige der Brücke aus der Verbindung eines Festkondensators (C3,C4) und eines Festwiderstands (R3,R4) besteht, so daß an den Anschlußklemmen des eines oder anderen Brückenzweigs eine Gleichspannung U gemessen wird, wobei diese Spannung die Differenz der Drucke (P1,P2) wiedergibt, die beiderseits der Membran (7) herrschen.

8. Wandler nach einem der Ansprüche 1 bis 7, **dadurch gekennzeichnet, daß** die Verbindungsmittel (8) zwischen der Membran (7) und jedem ersten und zweiten Stromkreis (13a,13b) die elektrische Verbindung zwischen dem ersten (13a) und zweiten (13b) Stromkreis sowie die Erdung der Membran (7) sicherstellen.

9. Wandler nach Anspruch 8, **dadurch gekennzeichnet, daß** die Verbindungsmittel (8) mindestens eine Metalleinlage (8a) umfassen, die zwischen die entsprechenden peripheren Bereiche des ersten und zweiten Stromkreises (13a,13b) eingefügt ist, deren eine Seite in direktem Kontakt mit dem peripheren Bereich der Membran (7) steht, so daß letztere geerdet ist, und die mehrere Durchführungen (TRA1,TRA2) aufweist, wobei durch jede der letzteren ein Leiter (T1,T2) hindurchgeführt wird, der durch das Substrat des ersten und zweiten Stromkreises (13a,13b) in Höhe seines jeweiligen peripheren Bereichs hindurchtritt, die freien Enden der Leiter (T1,T2) jeweils im Kontakt stehen mit Bahnen des ersten Stromkreises (13a) und Bahnen des zweiten Stromkreises (13b), und die besagten Bahnen in einem Bereich der Seiten der Stromkreise (13a,13b) liegen, der gegenüber Streukapazitäten unempfindlich ist.

10. Wandler nach einem der Ansprüche 1 bis 9, **dadurch gekennzeichnet, daß** die beiden kommunizierenden Teile von jeder der nicht kommunizierenden Kammern (5a,5b) des Wandlers durch mindestens ein durchgehendes Loch (O1,O2) miteinander kommunizieren, das im mit jeder Kammer (5a,5b) verbundenen Stromkreis (13a,13b) ausgebildet und so positioniert ist, daß es nicht mit der Einspeisungsöffnung der unter Druck stehenden Flüssigkeit (9a,10a) fluchtet, die mit ihr verbunden ist.
